# EUROPÄISCHE PATENTSCHRIFT

(11) **EP 3 006 148 B1**
(45) Veröffentlichungstag und Bekanntmachung des Hinweises auf die Patenterteilung: **09.08.2017**
(21) Anmeldenummer: 14187964.3
(22) Anmeldetag: 07.10.2014
(51) Int. Cl.: B23C 5/00, B23C 5/08, B23C 5/22

(54) **Scheibenförmiges Werkzeug mit vereinfachter Segmentbefestigung**
Disc-shaped tool with simplified segment fixing
Outil en forme de disque doté de fixation de segment simplifiée

(43) Veröffentlichungstag der Anmeldung: 13.04.2016
(73) Patentinhaber: WALTER AG, 72072 Tübingen (DE)
(72) Erfinder: Rudelbach, Markus, 72800 Eningen (DE)
(74) Vertreter: Jedlöv, Cecilia

(56) Entgegenhaltungen:
- EP-A1- 2 136 951
- EP-A2- 0 253 071
- DE-A1- 2 259 315
- GB-A- 1 053 810
- US-A- 1 595 924
- US-A1- 2012 030 907

## Beschreibung

Die vorliegende Erfindung betrifft ein scheibenförmiges Werkzeug mit einem eine Rotationsachse definierenden scheiben- oder ringförmigen Grundkörper und einer Mehrzahl von segmentartigen Schneidenträgern, die an der Peripherie des Grundkörpers befestigbar sind und mit mindestens einer Spannvorrichtung zur Befestigung der Schneidenträger an dem Grundkörper. Insbesondere betrifft die vorliegende Erfindung ein für das spanende Bearbeiten von Kurbelwellen oder Nockenwellen vorgesehenes scheibenförmiges Werkzeug.

Derartige Werkzeuge sind schon seit langem bekannt und in Gebrauch. Ein dem Oberbegriff des Anspruchs 1 entsprechendes Werkzeug für die Kurbelwellenbearbeitung ist beispielsweise aus der EP 2 136 951 B1 bekannt. Die Figuren 1 bis 4 der EP 2 136 951 B1 zeigen mehrere Segmente, die jeweils mittels zwei Schrauben und Klemmkeilen an der Peripherie des Grundkörpers, die einer axial vergleichsweise kurzen Zylinderfläche mit großem Durchmesser entspricht, befestigt werden. Eine solche Befestigung von Segmenten ist umständlich und zeitaufwendig und erfordert die Handhabung mehrerer getrennter Teile, nämlich des relativ schweren Segmentes, entsprechender Schrauben und Klemmkeile sowie der hierfür notwendigen Werkzeuge.

Die Rotationachse des Werkzeugs erstreckt sich dabei im Wesentlichen senkrecht zu der durch die Scheibe bzw. deren Peripherie definierten Ebene, wobei die Scheibe nicht unbedingt ebene Oberflächen aufweist, sondern durchaus strukturierte Oberflächen mit Aufbauten, Verstärkungselementen und Aussparungen aufweisen kann, ohne dass dadurch das Gesamterscheinungsbild der Scheibenform mit einer großen Ausdehnung in radialer Richtung und vergleichsweise kleinen Abmessungen in axialer Richtung beeinträchtigt wird.

Es sind auch Varianten bekannt, bei welchen entsprechende Segmente auf einem Ring vormontiert werden, wobei aber auch hier die Montage der Segmente auf dem Ring relativ aufwändig ist und der Ring, der dann Teil eines zweiteiligen Grundkörpers ist, an dem zweiten Teil des Grundkörpers montiert werden muss. Bei den üblichen Abmessungen der für die Herstellung bzw. Bearbeitung von Kurbelwellen verwendeten Werkzeuge , d.h. bei einem Durchmesser des Schneidkreises in der Größenordnung von 600 bis 800 mm, kann ein solcher Ring jedoch ein erhebliches Gewicht in der Größenordnung von 50 kg und mehr aufweisen, sodass dementsprechend ein Kran oder anderes Hebezeug zum Montieren des Ringes erforderlich ist.

Andererseits sind lange Stillstandzeiten von Bearbeitungsmaschinen unerwünscht und führen zu hohen effektiven Bearbeitungskosten, so dass man generell Schneidenträger austauscht, die jeweils eine Vielzahl von Schneideinsätzen tragen und die außerhalb der Dreh- oder Drehräum- bzw. Fräsmaschine vormontiert werden können.

Es gibt deshalb bereits verschiedene Ansätze, die bei einem Wechsel der verschlissenen Schneiden bzw. Schneideinsätze auszutauschenden Teile leichter handhabbar auszugestalten, indem beispielsweise der Grundkörper an der Werkzeugspindel verbleibt und nur die mit Schneidelementen bestückten Segmente ausgetauscht werden, deren Anzahl auf wenige (im Allgemeinen unter 10) begrenzt ist.

Der Austausch von Schneidenträgern, sei es in Form von komplett vormontierten Schneidringen oder in Form einzelner Ringsegmente, erfordert jedoch in der Regel Spezialwerkzeug und die Handhabung der immer noch relativ schergewichtigen Scheidenträger an der Spindel oder an dem Grundkörper bzw. einem mit der Spindel verbundenen Grundkörperteil. Wegen der Größe und Komplexität eines segmentförmigen Schneidenträgers und dessen Montage an der Peripherie einer im Allgemeinen kreisförmigen Scheibe besteht außerdem die Gefahr von Fehlmontagen oder einem Scheitern der Montage aufgrund von Toleranzabweichungen bzw. Maßänderungen allein aufgrund von Temperaturschwankungen und unterschiedlichen Wärmedehnungen der miteinander zu verbindenden Teile. Dies erschwert auch eine maschinelle bzw. automatische Montage.

Gegenüber diesem Stand der Technik liegt der vorliegenden Erfindung die Aufgabe zu Grunde, eine scheibenförmiges Werkzeug der eingangs genannten Art zu schaffen, das an seiner Peripherie mit einer Mehrzahl von Segmenten bestückt ist, die in vergleichsweise einfacher und schneller Weise montierbar und befestigbar sind, wobei die Montage vorzugsweise auch maschinell durchführbar sein soll, ohne dass man zusätzliches Werkzeug und getrennt zu handhabende Spannelemente benötigt. Die Möglichkeit einer manuellen Betätigung mit Hilfe eines einzelnen vergleichsweise einfachen Handwerkzeugs sollte dabei jedoch nicht ausgeschlossen sein.

Diese Aufgabe wird dadurch gelöst, dass die Spannvorrichtung für die Befestigung und das Spannen eines Schneidenträgers jeweils einen am Grundkörper beweglich gelagerten Spannkeil aufweist, dessen eine Spannfläche aufweisendes Abtriebsende mit einer Aussparung an einem Schneidenträger und dessen Antriebsende mit einem ebenfalls beweglich am Grundkörper angeordneten Stößel in Eingriff steht, wobei der Stößel auf bzw. zusammen mit einem am Grundkörper von Hand oder maschinell verschiebbar montierten Schlitten in Bewegungsrichtung des Schlittens federnd nachgiebig gelagert ist.

Somit sind alle Elemente, die zum Befestigen und Spannen eines Segmentes erforderlich sind, unmittelbar an dem Grundkörper des Werkzeugs selbst vorgesehen und zum Spannen und Befestigen eines Segmentes muss lediglich der Schlitten entweder von Hand, d.h. mit einem einfachen Handwerkzeug, wie z. B. einem Hebel, oder maschinell bewegt werden, wobei der Schlitten z. B. über eine Feder auf das Antriebsende eines Stößels wirkt, dessen Abtriebsende wiederum auf das Antriebsende eines Spannkeiles einwirkt, der sich entsprechend verschiebt und in einer Aussparung an dem Schneidenträger eingreift und diesen Schneidenträger dadurch befestigt und spannt.

Zur Befestigung und zum Festspannen eines segmentartigen Schneidenträgers reichen zwei Spannkeile aus, die gemäß einer Ausführungsform in zwei entsprechende, bezüglich einer Winkelhalbierenden durch das Segment spiegelbildlich zueinander angeordnete Aussparungen an einem Schneidenträger eingreifen.

Darüber hinaus ist es grundsätzlich möglich, gleichzeitig zwei derartige Spannkeile mit einem einzigen Stößel zu bewegen bzw. in Spannrichtung mit den entsprechenden Aussparungen am Schneidenträger in Eingriff zu bringen, indem der Stößel mit den Antriebsenden beider Spannkeile gleichzeitig in Eingriff gebracht wird. Alternativ kann man gegebenenfalls zwei unabhängig am selben Schlitten federnd gelagerte Stößel gleichzeitig mit Hilfe desselben Schlittens bewegen

Die federnde Lagerung des Stößels am Schlitten ermöglicht generell einen gewissen Ausgleich von Toleranzabweichungen und unterschiedlichen Wärmedehnungen der zusammenwirkenden und zusammen zu montierenden Teile.

Zweckmäßigerweise weist das Abtriebsende des Stößels mindestens eine und gegebenenfalls für die Betätigung von zwei Spannkeilen auch zwei zu seiner Vorschubrichtung geneigte Abtriebsflächen auf.

Der Grundkörper hat zweckmäßigerweise eine zentrale Aufnahmeöffnung (beispielsweise eine Kurzkegelaufnahme) oder einen zentralen Zapfen für die Verbindung mit einer Antriebsspindel, und der Grundkörper kann, wie bereits erwähnt, auch zweiteilig ausgebildet sein als ein Ring bzw. eine Ringscheibe mit einem zentralen Grundkörperteil, welches seinerseits mit einer Antriebsspindel in Verbindung steht, wobei allerdings die Spannvorrichtung mit Spannkeil, Stößel und Schlitten auf der Ringscheibe montiert ist.

Zweckmäßigerweise hat der Spannkeil eine längliche Form und ist im Wesentlichen nur in seiner Längsrichtung verschiebbar am Grundkörper gelagert. Auch der Stößel hat in der bevorzugten Ausführungsform der Erfindung eine überwiegend längliche Form und ist in seiner Längsrichtung verschiebbar am Grundkörper gelagert.

Zweckmäßigerweise haben der Spannkeil und/oder der Stößel neben ihrem jeweiligen Antriebs- und Abtriebsende jeweils einen Führungsabschnitt konstanten Querschnitts, der innerhalb entsprechender Führungskulissen läuft.

Der Führungsabschnitt kann insbesondere zylindrisch sein und durch entsprechende Halterungselemente mit zylindrischer Bohrung hindurchgeführt sein.

Das Abtriebsende des Stößels ist vorzugsweise eine Keilfläche, die zur Vorschubrichtung des Stößels geneigt ist und auch der Spannkeil hat, wie bereits durch den Begriff "Spannkeil" zum Ausdruck gebracht wird, eine bezüglich seiner Vorschubrichtung geneigte Abtriebsfläche, die mit einer Fläche der Aussparung am Schneidenträger in Eingriff tritt, wobei diese Fläche bezüglich der Radialrichtung des Werkzeugs bzw. des Grundkörpers eine Hinterschneidung definiert.

In der bevorzugten Ausführungsform schließen die Längsrichtungen von Stößel und Spannkeil einen Winkel von weniger als 180°, vorzugsweise einen Winkel im Bereich zwischen 80 und 140°, miteinander ein, wenn das Abtriebsende des Stößels mit dem Antriebsende des Spannkeils in Eingriff steht.

Die Neigung der Abtriebsfläche am Stößel sorgt für eine entsprechende Untersetzung und gleichzeitig für eine entsprechende Kraftverstärkung bei der Bewegung des Stößels gegenüber der Bewegung des Spannkeils. Die Neigung der miteinander in Eingriff tretenden Flächen wird dabei zweckmäßigerweise so gewählt, dass eine große Bewegung des Stößels in eine vergleichsweise kleinere Bewegung des Spannkeils untersetzt wird. Der Untersetzungsfaktor kann dabei zweckmäßigerweise in der Größenordnung von 1/2 bis 1/10 liegen, ohne dass damit zwingend eine entsprechende Beschränkung auf diesen Untersetzungsbereich verbunden ein soll.

Die vom Stößel aufzubringende Spannkraft wird - abzüglich etwaiger Reibungsverluste - entsprechend um einen Faktor 2 bis 10 verstärkt, und eine weitere Verstärkung der Spannkraft wird gegebenenfalls auch noch durch den Eingriff einer zur Vorschubrichtung des Spannkeiles geneigten Abtriebsfläche des Spannkeils beim Eingriff mit der Wand einer Aussparung am segmentförmigen Schneidenträger erzielt.

Dabei wird die Spannkraft am Stößel außerdem durch seine federnde Lagerung begrenzt, d.h. die auf den Stößel wirkende Spannkraft wird vom Schlitten über eine Feder auf den Stößel übertragen, sodass zwischen dem aktiv bewegten Schlitten und Stößel sowie dem Spannkeil keine starre Verbindung besteht und durch die Feder bzw. Federn etwaige Toleranzabweichungen, insbesondere durch eine Variation der Temperatur der beteiligten Elemente bedingte Längen- und Abstandsänderungen der Bauteile der Spannvorrichtung, des Grundkörpers und des segmentartigen Schneidenträgers, aufgefangen werden können, insbesondere wenn dem Schlitten eine feste Rastposition für die Spannstellung zugewiesen ist Der maximale Hub der in Form einer Druckfeder vorgesehenen federnden Lagerung muss nicht mehr als 3 mm betragen und die Federkonstante liegt beispielsweise in der Größenordnung von 100 bis 300 N/mm, um einerseits eine ausreichende Spannkraft übertragen zu können, andererseits aber einen Teil des Federhubs für den Ausgleich von Toleranzabweichungen praktisch nutzen zu können. Es versteht sich, dass bei Toleranzabweichungen auch die Spannkraft entsprechend der Federauslenkung in der Spannstellung in einem kleinen Bereich variiert.

Bevorzugt ist zwar eine lineare Bewegung und Führung von Schlitten, Stößel und/oder Spannkeil, jedoch kann eines oder können auch mehrere dieser Elemente gegebenenfalls entlang eines Kreisbogens bewegbar gelagert sein. Beispielsweise könnte der Stößel auch ein Exzenter sein, der durch seine Drehung eine Verschiebung des Spannkeiles bewirkt. Auch der Spannkeil kann beispielsweise ein schwenkbarer Hebel sein. Zum Beispiel könnte der Spannkeil ein L-förmiger Hebel sein, der an einem seiner Schenkel schwenkbar gelagert ist und der durch einen Stößel (z. B. einen Exzenter) verschwenkt wird, wobei ein weiterer, keilförmiger Schenkel des L-förmigen Spannkeils in eine Aussparung am Schneidenträger hineinbewegt wird.

In einer Ausführungsform der Erfindung weist der Schlitten mindestens eine Rastposition auf, die der Spannstellung des Spannkeiles entspricht, wobei der Spannkeil durch den Stößel in dieser Spannstellung gehalten wird. Nach dem Erreichen der Rastposition und dem Verrasten des Schlittens in der entsprechenden Position kann ein von dem Schlitten und dem Werkzeug ansonsten getrenntes Betätigungselement mit dem Schlitten außer Eingriff gebracht werden, wobei der Spannkeil in der Spannstellung bleibt und das Segment sicher am Grundkörper verspannt.

In einer Ausführungsform ist als Rastelement ein im Grundkörper beweglich gelagerter Stift vorgesehen, der sich in der Raststellung in eine Rastbohrung des Schlittens erstreckt und der wiederum durch einen unabhängig vom Grundkörper gehalterten Betätigungsstift mit der Bohrung in dem Schlitten außer Eingriff bringbar ist. Das in Form eines Stiftes vorgesehene Rastelement ist am Grundkörper vorzugsweise in einer achsparallelen Bohrung aufgenommen, wobei auch die Rastbohrung am Schlitten sich parallel zur Rotationsachse des Werkzeugs erstreckt

Der Betätigungsstift ist zweckmäßigerweise für den Eingriff in die Rastbohrung und für eine Verschiebung des Schlittens in Spannstellung oder aus der Spannstellung heraus parallel und senkrecht zur Rotationsachse des Werkzeugs verschiebbar. Dies bedeutet, dass der Betätigungsstift als wesentlicher Teil einer Betätigungseinheit unabhängig davon, ob der Schlitten verrastet ist oder nicht, mit der Rastbohrung in Eingriff gebracht und dann in Richtung der entsprechenden Schlittenführung bewegt wird und dadurch den Schlitten und über die zwischengeschaltete Feder auch den Stößel in Spannrichtung antreibt oder aus der Spannstellung zurückzieht, wobei der Stößel wiederum mit dem entsprechenden Spannkeil in Eingriff tritt bzw. das Zurückziehen des Spannkeiles aus der Spannstellung zulässt.

Zweckmäßigerweise ist der Spannkeil entgegen der Spannstellung federnd vorgespannt, sodass beim Rückziehen des Stößels der Spannkeil automatisch mit der Aussparung am segmentförmigen Schneidenträger außer Eingriff tritt.

Zweckmäßigerweise erstreckt sich die Achse der Rastbohrung parallel zur Rotationsachse des Werkzeugs und auch der Raststift und der Betätigungsstift sind dementsprechend entlang dieser Achse bewegbar.

In einer Ausführungsform ist der Betätigungsstift wiederum an einem maschinell verfahrbaren Betätigungselement angeordnet, das sich außerhalb des Grundkörpers befindet und unabhängig von dem Grundkörper ist. Insbesondere kann das Betätigungselement eine Spindel eines zweiten Werkzeugs sein, das quer zur Rotationsachse des ersten Werkzeugs und zweckmäßigerweise auch quer zu seiner eigenen Rotationsachse bewegbar ist. Die Spindel kann einen zentralen Zapfen aufweisen, in dessen Verlängerung der Betätigungsstift angeordnet ist oder der unmittelbar den Betätigungsstift bildet.

Werkzeugmaschinen und insbesondere Werkzeuge zur spanenden Bearbeitung von Kurbelwellen weisen häufig mehrere parallel nebeneinander angeordnete, scheibenförmige Werkzeuge auf, die unabhängig voneinander bewegbar sind und im Betrieb gleichzeitig mehrere Zapfen oder Lager einer Kurbelwelle oder Nockenwelle erzeugen. Beim Wechsel der Schneidelemente kann man diese unabhängige Bewegbarkeit nebeneinander angeordneter Werkzeuge dazu nutzen, dass entlang der Achse des einen scheibenförmigen Werkzeugs ein entsprechender axial verfahrbarer Betätigungsstift angeordnet ist, den man verwenden kann, um die Spannvorrichtung an dem benachbarten Werkzeug zu betätigen. Die beiden benachbarten Werkzeuge können somit wechselweise als Betätigungseinrichtung für das jeweils anderen Werkzeug verwendet werden, indem die Achse des einen Werkzeugs relativ zu der Rastbohrung am Schlitten einer Spannvorrichtung des benachbarten Werkzeugs ausgerichtet und mit der Rastbohrung in Eingriff gebracht wird, woraufhin eine oder beide Spindeln der Werkzeuge quer zur Rotationsachse bewegt werden, um den Schlitten der Spannvorrichtung auf dem Grundkörper entweder in Spannrichtung oder in Löserichtung zu bewegen.

Die als Rastbohrung bezeichnete Bohrung kann im Übrigen auch ausschließlich für die Bewegung des Schlittens und Betätigung der Spannvorrichtung mittels eines Betätigungsstiftes oder dergleichen verwendet werden, ohne dass ein in diese Bohrung eingreifender Raststift vorgesehen ist.

Stattdessen kann als Rastelement beispielsweise auch mindestens eine am Schlitten angeordnete Sperrklinke vorgesehen sein, die mit einem entsprechenden Sperrzahn oder einer entsprechenden zahnartigen Aussparung an einer Schlittenführung in Eingriff und außer Eingriff bringbar ist.

In einer Ausführungsform sind hierfür zwei schwenkbar gelagerte Sperrklinken vorgesehen, die durch eine Feder in Sperrstellung gehalten werden und die bei entsprechendem Eingriff eines Betätigungselementes und Bewegen des Betätigungselementes in Spannrichtung entgegen der Federwirkung mit den Rastelementen an der Schlittenführung außer Eingriff kommen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren.

Es zeigen:
- Figur 1: eine schematische Seitenansicht eines erfindungsgemäßen Werkzeugs mit drei Segmenten und sechs Spannvorrichtungen,
- Figur 2: eine Detailansicht aus Figur 1 mit einer Spannvorrichtung,
- Figur 3: eine weitere Detailansicht der Spannvorrichtung in einer anderen axialen Ebene,
- Figur 4: schematisch eine weitere Variante der vorliegenden Erfindung,
- Figur 5: ein Detail aus Figur 4,
- Figur 6: eine Abwandlung der Variante nach den Figuren 4 und 5
- Figur 7: je eine Spannvorrichtung in entrasteter und verrasteter Stellung
- Figur 8: die Spannvorrichtungen nach Figur 7 in einer anderen axialen Ebene
- Figur 9: eine Spannvorrichtung mit Schlitten und Sperrklinken in entrasteter Position
- Figur 10: eine Spannvorrichtung mit Schlitten und Sperrklinken in verrasteter Position

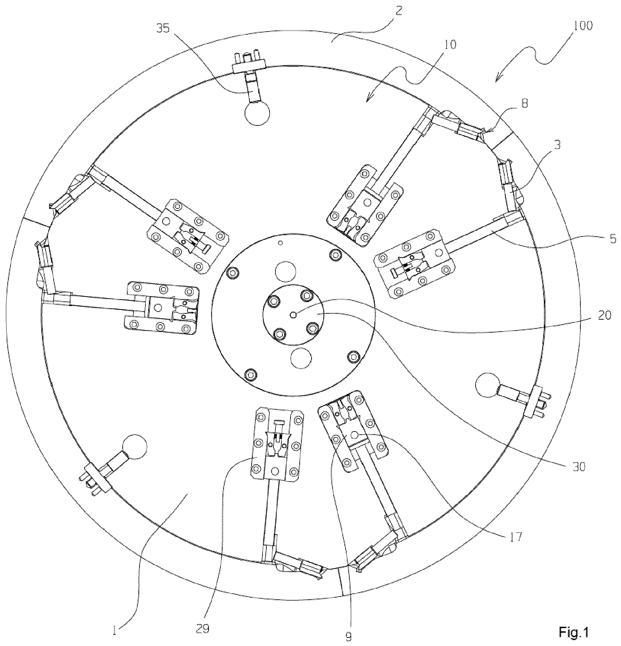

Man erkennt in Figur 1 den in Form einer relativ flachen Scheibe mit einer umlaufenden zylindrischen Randfläche ausgebildeten Grundkörper 1, der eine zentrale Bohrung zur Aufnahme einer Spindel 30 aufweist, die sich allerdings in Figur 1 genau genommen unter einer Abdeckung an der Stirnseite der Spindel verbirgt, die mit der Stirnseite der Spindel verschraubt ist. An der Peripherie des Grundkörpers 1 sind 3 kreisringförmige Segmente 2 befestigt, welche sich jeweils über einen Kreisbogen von 120° erstrecken und durch Spannvorrichtungen 10 in ihrer jeweiligen Position festgespannt gehalten werden. Positioniereinrichtungen 35, die mit Stiften in entsprechende Bohrungen der Segmente 2 eingreifen, sorgen für eine genaue Positionierung der Segmente vor dem Festspannen. Es versteht sich, dass der Rand des Grundkörpers auch ein Polygonzug sein könnte, wobei die Schneidenträgersegmente dann auf ihrer Außenseite im Wesentlichen einem Kreisbogenverlauf folgen würden und auf ihrer radial inneren Seite geradlinig an eine Polygonseite angepasst wären

Die Begriffe "Segment" und (segmentförmiger) "Schneidenträger" werden im Rahmen der vorliegenden Anmeldung synonym verwendet.

Der Grundkörper 1 hat typischerweise einen Durchmesser in der Größenordnung von 50 bis 70 cm und ist zur Erhöhung seiner Stabilität strukturiert und im zentralen Bereich etwas verdickt mit entsprechenden Aufnahmeaussparungen für die Spannvorrichtung 10 bzw. einzelne Komponenten derselben und mit teilweise radialen bzw. zur Peripherie hin führenden Bohrungen für Spannkeile 3, Spannstößel 5 und die Positionierelemente 35 versehen.

Der Grundkörper 1 ist im vorliegenden Beispiel mit 6 Spannvorrichtungen 10 ausgerüstet, die - abgesehen von ihrem paarweise spiegelbildlichen Aufbau - identisch sind, wobei jedoch in allen Ausführungsbeispielen jeweils nur eine Spannvorrichtung 10 beschrieben wird und die Bezugszeichen der besseren Darstellbarkeit wegen auf mehrere dargestellte Spannvorrichtungen verteilt wurden.

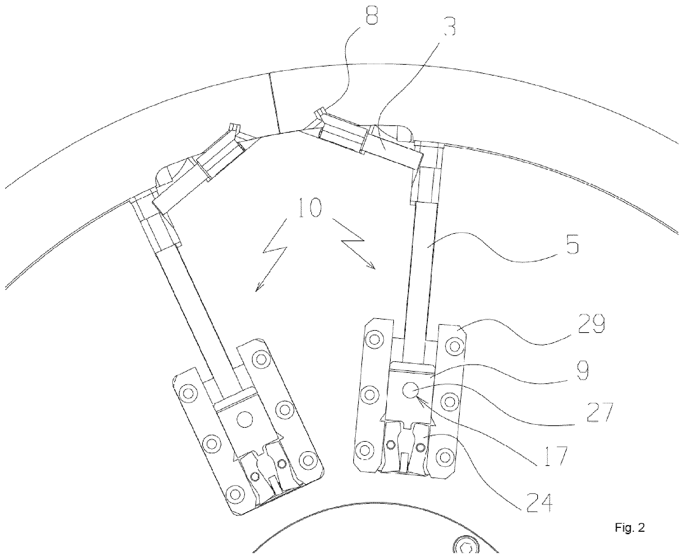

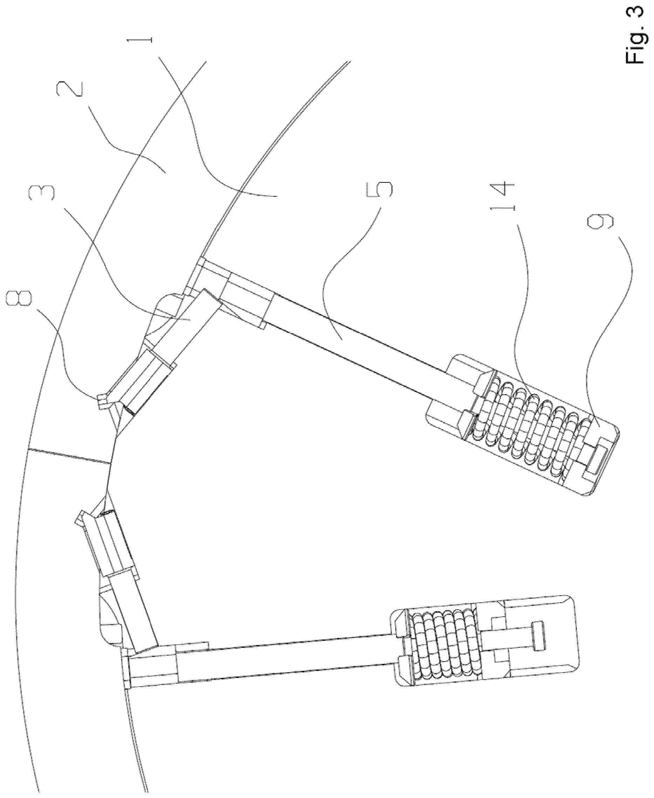

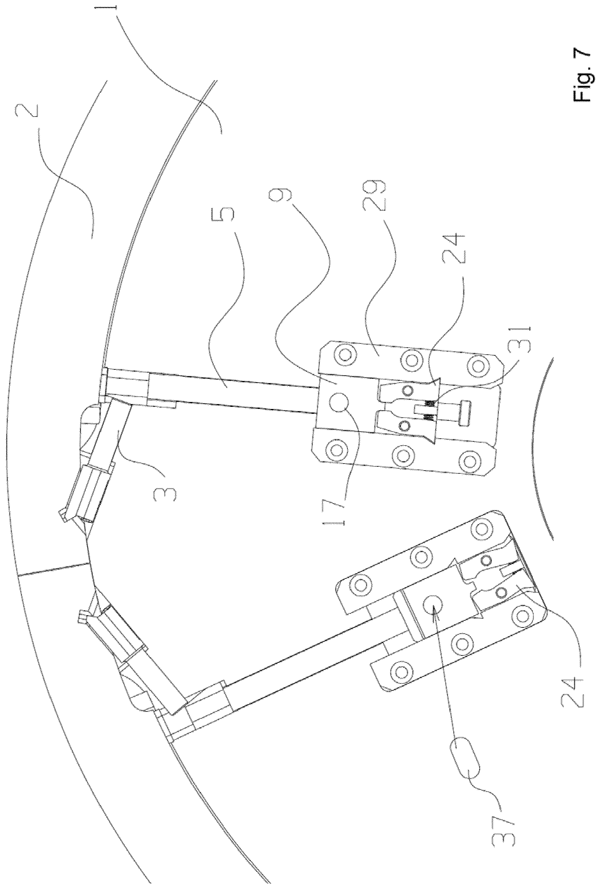

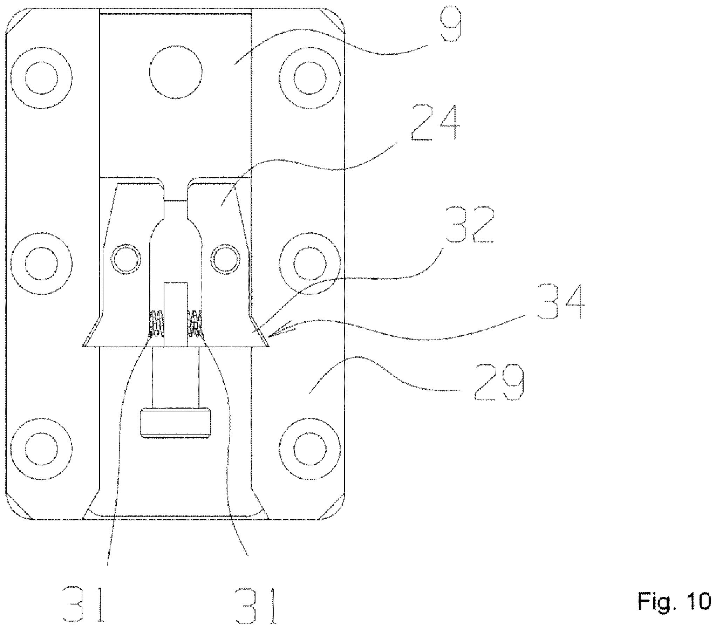

Figur 2 zeigt wiederum nur schematisch zwei Spannvorrichtungen 10, bestehend aus einem Spannkeil 3, der in eine hinterschnittene Aussparung 8 nahe eines Endes eines Segmentes 2 eingreift, und mit einem Stößel 5, der in einer Radialbohrung des Grundkörpers 1 geführt ist, um den Spannkeil 3 zu betätigt. Der Stößel 5 ist wiederum federnd (siehe Figur 3) an einem Schlitten 9 gelagert, der in Schlittenführungen 29 in Längsrichtung des Stößels bewegbar ist. Alternativ ermöglichen entweder ein Raststift 27 oder Rastklinken 24 die Verrastung des Schlittens 9 in einer Spannstellung, wie später noch erläutert wird. Es sei angemerkt, dass in der in Figur 2 erkennbaren entspannten Stellung tatsächlich kein Raststift 27 in die Bohrung 17 eingreift. Vielmehr ist der Raststift am Grundkörper 1 so positioniert, dass er nur in der Spannstellung in die Bohrung 17 eingreift, die - allerdings unter Verwendung eines anderen Rastmechanismus - unter anderem in den Figuren 7 und 10 dargestellt ist.

Figur 3 zeigt eine Spannvorrichtung gemäß Figur 2 in einer anderen axialen Ebene, in welcher die Lagerung des Stößels 5 über eine Feder 14 am Schlitten 9 erkennbar ist. Figuren 2 und 3 zeigen jeweils die entspannte Stellung der Spannvorrichtung, in welcher der Spannkeil 3 zwar ansatzweise in der Aussparung 8 liegt, jedoch das Segment 2 nicht am Grundkörper 1 festspannt.

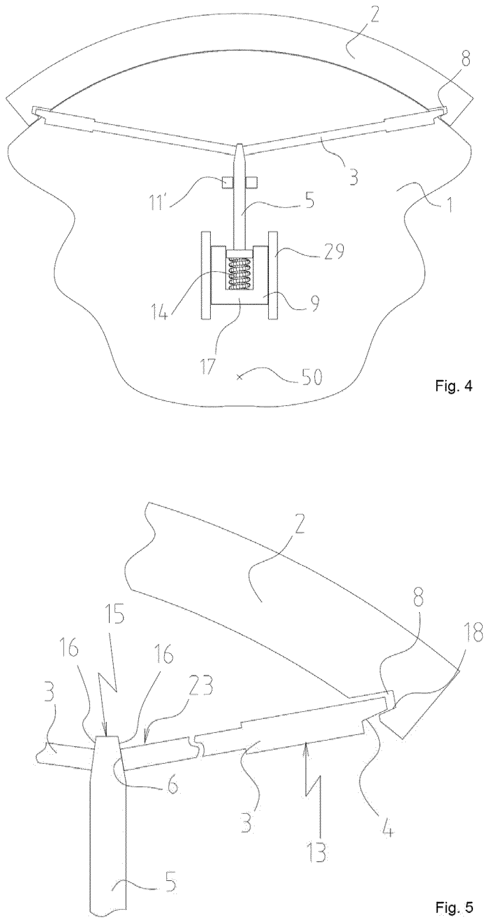

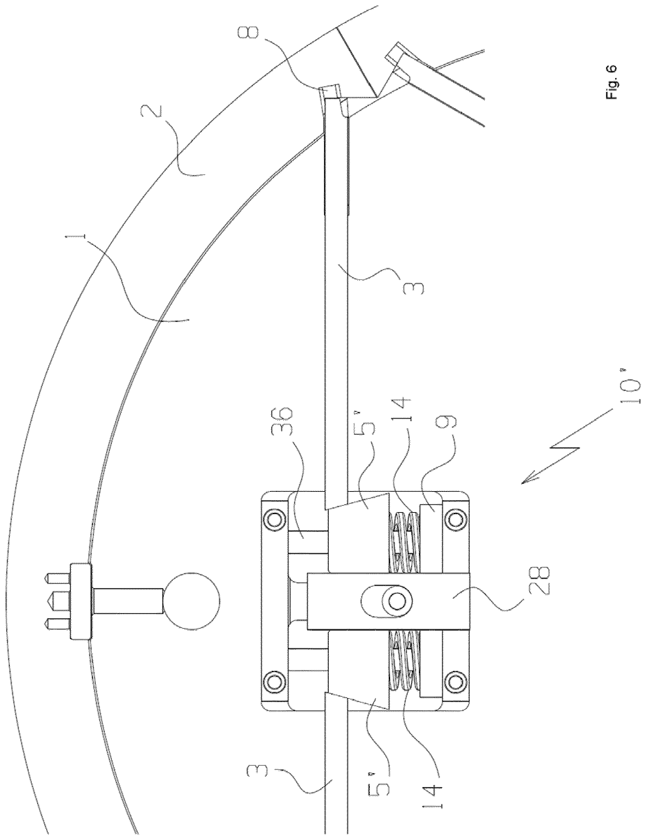

Die Figuren 4 und 6 sind eine schematische Darstellungen einer weiteren Ausführungsform, bei welcher zwei unterschiedlich ausgerichtete Spannkeile 3 gleichzeitig durch einen gemeinsamen Spannstößel 5 betätigt werden können.

Das Grundprinzip der Spannvorrichtungen nach der vorliegenden Erfindung wird nunmehr anhand der Figuren 4 bis 6 erläutert und ist analog auf die Ausführungsformen mit nur einem Spannkeil 3 je Stößel 5 übertragbar.

Man erkennt in Figur 4 einen Schlitten 9, der in einer Schlittenführung 29 linear beweglich gelagert ist. Die Schlittenführung 29 ist auf dem Grundkörper 1 befestigt oder bildet einen Teil des Grundkörpers 1. In der Spannstellung greift ein Spannstift 27, der wiederum am Grundkörper 1 in einer entsprechenden Bohrung federnd gelagert ist, in eine kreisförmige Aussparung 17 des Spannschlittens 9 ein. Die schraubenförmigen Druckfedern 14 sind gespannt und drücken den Spannstößel 5 in radialer Richtung des Grundkörpers 1 nach außen. Wie man insbesondere anhand eines vergrößerten Ausschnitts der Figur 4 in Figur 5 erkennt, treten dabei zur Längsrichtung bzw. Achse des Stößels 5 geneigte Abtriebsflächen 16 mit Antriebsflächen 6 am Antriebsende 23 des Spannkeiles 3 in Eingriff und drücken somit jeweils einen Spannkeil 3 nach rechts und links in die Aufnahmeaussparungen 8, die jeweils in der radial inneren zylindrischen Fläche des ringförmigen Segmentes 2 in der Nähe der Enden desselben angeordnet sind. Bei den übrigen Ausführungsformen nach den Figuren 1 bis 3 und 6 bis 10 ist jedem Spannkeil ein eigener Stößel 5 zugeordnet

Eine entsprechende Schrägfläche 4 am Abtriebsende 13 des Spannkeiles 3 tritt dabei mit der eine Hinterschneidung definierenden Wand 18 in der Aussparung 8 in Eingriff, sodass der Spannkeil 3 das entsprechende Ende des Segmentes 2 sowohl in radialer Richtung als auch in Umfangsrichtung an dem Grundkörper verspannt. Da die beiden Spannkeile 3 bezüglich des Stößels 5 symmetrisch und unter einem Winkel von ca. 120 bis 170° zueinander ausgerichtet sind und in Umfangsrichtung gesehen in entgegengesetzten Richtungen auf den segmentartigen Schneidenträger 2 einwirken, wirkt die resultierende Spannkraft im Wesentlichen in radialer Richtung nach innen, d.h. das Segment 2 wird fest auf die Peripherie des Grundkörpers 1 aufgepresst, wobei die Stirnseiten des Segmentes in Umfangsrichtung gesehen jeweils an die entsprechenden Stirnseiten benachbarter Segmente angedrückt werden oder zumindest das Spiel zwischen den Stirnseiten benachbarter Segmente verringern.

Etwaige Toleranz- bzw. Sollmaßabweichungen, zum Beispiel aufgrund der Wärmeausdehnung einzelner Elemente, die bei der in den Figuren 4 und 5 dargestellten Variante rechts und links des Stößels 5 womöglich unterschiedlich sind, können unter anderem dadurch aufgefangen werden, dass man dem Stößel 5 in der seitlichen Führung 11' etwas Spiel lässt, so dass in Anbetracht der symmetrischen Anordnung der Spannkeile bezüglich des Stößels 5 die Spannkraft auf die beiden Spankeile 3 gleichmäßig verteilt wird, indem der Stößel gegebenenfalls in Richtung eines der Spannkeile ausweicht.

In einer alternativen Variante gemäß Figur 6 ist zwar auch nur eine einzige Spannvorrichtung 10' für zwei entgegengesetzt wirkende Spannkeile 3 vorgesehen, jedoch ist hier der Stößel 5 durch zwei getrennte Stößel 5' ersetzt, die voneinander unabhängig sind und eine zentrale Bohrung aufweisen, durch die ein Führungsstift 36 hindurch verläuft, wobei die beiden Stößel 5' sich zusätzlich an einem zentralen Widerlager 28 abstützen.

Auf diese Weise wird sichergestellt, dass unterschiedliche Längenmaße oder Sollmaßabweichungen der Spannkeile 3 und der entsprechenden Aussparungen 8 durch unterschiedlich weiten Vorschub der beiden Stößel 5' ausgeglichen werden können.

Um das Segment 2 auszutauschen, muss die Spannvorrichtung 10 bzw. müssen deren Spannkeile 3 mit den Aussparungen 8 des Segmentes 2 außer Eingriff gebracht werden. Hierzu muss der Stößel 5 in radialer Richtung zurückgezogen werden. Dieses erfordert wiederum eine entsprechende Rückzugbewegung des Schlittens 9 und die Lösung der Verrastung des Raststiftes 27 in der Bohrung 17. Dies könnte beispielsweise mit Hilfe eines Handhebels geschehen, dessen freies Ende mit einem Querstift in ein Langloch 37 (beispielhaft dargestellt in Figur 7) an einem Grundkörper eingreift und der in einem Abstand d von dem Querstift sowie in einem größeren Abstand von einem Betätigungsende des Hebels einen Betätigungsstift aufweist, der von außen gegen den Raststift 27 gedrückt wird und den Raststift 27 somit in die entsprechende Aufnahmebohrung am Grundkörper 1 zurückdrückt, sodass der Betätigungsstift mit der Bohrung 17 in Eingriff treten und der Schlitten 9 mit Hilfe des Hebels gehalten und durch Verschwenken des Hebels um den Querstift im Langloch 37 radial bewegt werden kann, wobei sich bei einer radialen Einwärtsbewegung die Federn 14 entspannen und letztlich sich auch der Stößel 5 zurückzieht. Entsprechend können sich dann auch die Spannkeile 3 aus den Aussparungen 8 zurückziehen, wobei es zweckmäßig ist, wenn diese Spannkeile 3 durch entsprechende Federn in die zurückgezogene Position vorgespannt sind. Ein solcher Handhebel und ein Langloch 37 zur Aufnahme eines Querstiftes des Handhebels können auch als Notfallbetätigung für den Fall vorgesehen sein, dass die ansonsten vorgesehene maschinelle Betätigung ausfällt.

Eine bevorzugte Alternative zu einem Handwerkzeug für die Bewegung des Schlittens 9 besteht in einem Betätigungsstift 20, der zentral entlang der Achse 50 der Spindel eines benachbarten Fräswerkzeuges angeordnet ist. In Figur 1 erkennt man einen solchen Betätigungsstift 20 als zentralen schwarzen, kreisförmigen Punkt im Zentrum der Spindel, wobei dieser Betätigungsstift 20 in der Spindel 30 entlang der Achse derselben bewegbar ist oder von dem freien Ende der Spindel 30 und einem daran angeordneten Grundkörper 1 axial hervorsteht. Die Bewegung des Betätigungsstiftes kann wahlweise mit verschiedenen bekannten maschinellen Methoden erfolgen, beispielsweise hydraulisch, pneumatisch oder durch elektrische Antriebseinrichtungen. In entsprechenden Werkzeugmaschinen bzw. Bearbeitungszentren, in denen relativ große, scheibenförmige Werkzeuge verwendet werden, insbesondere in Bearbeitungsmaschinen für die Kurbelwellen- oder Nockenwellenherstellung, sind in der Regel mehrere benachbarte scheibenförmige Werkzeuge auf kurzen Spindeln 30 montiert und diese Maschinen weisen in aller Regel unabhängig voneinander radial (und generell um und entlang mehrerer Achsen) bewegbare Spindeln 30 auf, da jedes der parallelen scheibenförmigen Werkzeuge gegebenenfalls unterschiedliche Bereiche einer Kurbelwelle oder Nockenwelle mittels einer Dreh- einer Drehfräs- oder Drehräumtechnik, d.h. während der Drehung des zu bearbeitenden Werkstückes um eine zur Spindelachse parallele Achse, bearbeitet werden muss.

Dementsprechend kann der zentrale Betätigungsstift einer Spindel 30 eines benachbarten Werkzeugs für das Einfahren in die zu dem jeweils gegenüberliegenden Werkzeug hin freiliegende Öffnung 17 eines Schlittens einer Spannvorrichtung 10 verwendet werden, woraufhin dann die gewünschte lineare Verschiebung des Schlittens über eine entsprechende lineare Relativverschiebung der gegenüberliegenden Spindel 30 entlang der Schlittenführung 29 quer bzw. senkrecht zu den Spindelachsen erfolgen kann. Dabei kann der Schlitten 9 beispielsweise zunächst in die Spannstellung bewegt und so ausgerichtet werden, dass der am Grundkörper vorgesehene Raststift der Bohrung 17 gegenüberliegt, sodass beim Zurückziehen des Betätigungsstiftes 20 der Raststift 27 automatisch in die Bohrung 17 eintritt und den Schlitten und damit auch den Stößel und den Spannkeil in der Raststellung hält.

Die über die Federn ausgeübte Spannkraft ermöglicht dabei einen Toleranzausgleich aufgrund etwaiger temperaturbedingter Längenänderungen oder Toleranzabweichungen der Stößel 5, der Spannkeile 3 bzw. der Segmente 2 und deren Aussparungen 8.

Zum Entspannen wird wiederum der Betätigungsstift 20 eines benachbarten Werkzeugs mit der Bohrung 17 ausgerichtet und der Betätigungsstift 20 in die Bohrung 17 eingefahren, sodass der Raststift 27 in seine entsprechende Aufnahmebohrung am Grundkörper 1 zurückgedrückt wird und der Schlitten 9 anschließend mit Hilfe des Betätigungsstiftes 20 entlang der Führungsrichtung des Schlittens radial bewegt werden kann.

Eine Alternative zu der Verrastung mit Hilfe eines Raststiftes 27 und die Funktion dieser alternativen Ausführungsform ist in den Figuren 7 sowie 9 und 10 veranschaulicht. Figur 7 zeigt schematisch den Schlitten 9 innerhalb der Schlittenführung 29. Auch in diesem Fall weist der Schlitten 9 eine Bohrung 17 auf, die aber nicht für die Aufnahme eines Raststiftes, sondern nur für die Aufnahme des Betätigungsstiftes 20 vorgesehen ist.

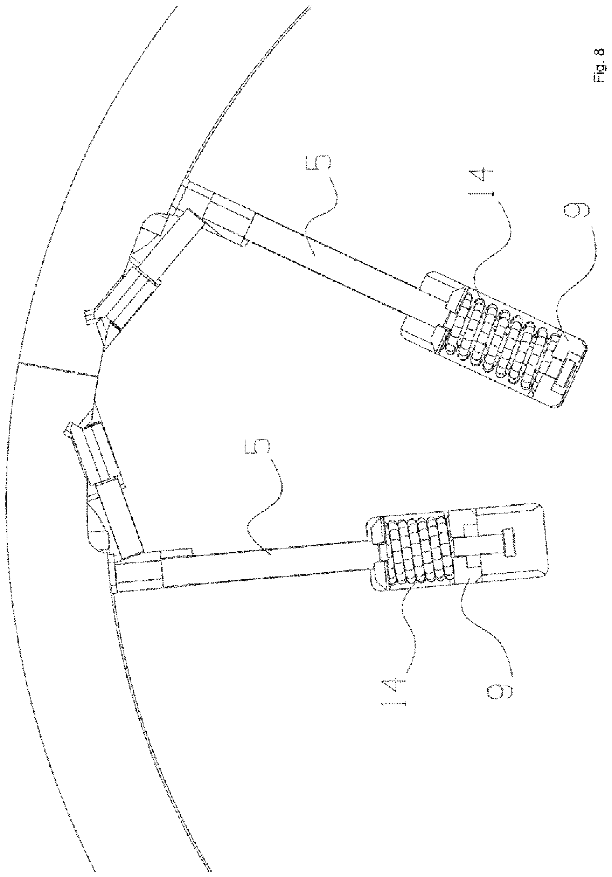

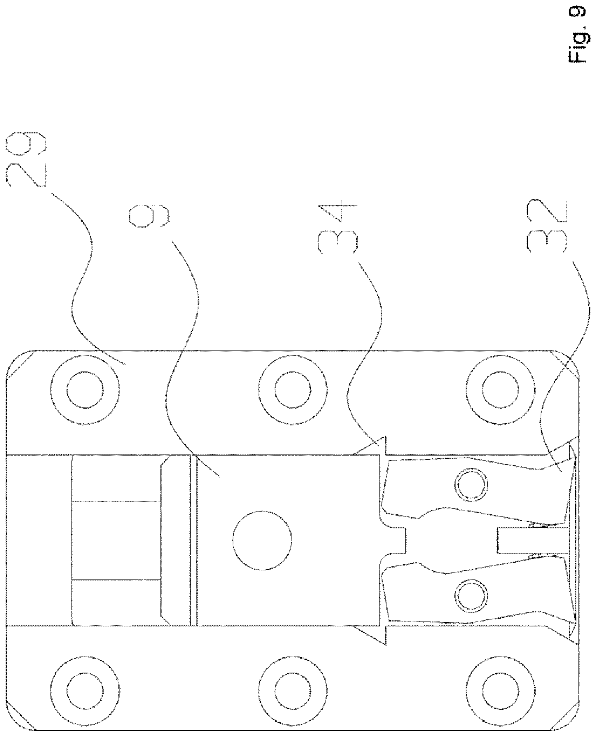

Für die Verrastung sind hingegen mittels einer oder mehreren Federn 31 in Raststellung vorgespannte Sperrklinken 24 vorgesehen. Analog zu dem eben bereits beschriebenen Vorgang kann auch hier der Betätigungsstift 20 eines benachbarten Fräswerkzeuges in die Bohrung 17 eingefahren und der Schlitten 9 dann in die Spannstellung (in Figur 8 in Richtung nach oben) bewegt werden. Die auf dem Schlitten 9 schwenkbar gelagerten Sperrklinken 24 werden dabei mitgenommen, wobei die Feder 31 durch die auf der Schlittenführung aufgleitenden Rastnasen zusammengedrückt wird. Sobald der Schlitten 9 die Rastposition erreicht hat, in welcher die Rastnasen 32 den Rastaufnahmen 34 gegenüberliegen, können die Sperrklinken aufgrund der Vorspannung durch die Feder 31 in die Sperrklinkenaufnahme 34 einschwenken und somit den Schlitten 9 an dem Grundkörper verrasten (siehe Figuren 9 und 10).

Um die Sperrklinken 24 zu lösen und den Schlitten 9 wieder in die entspannte Position der Spannvorrichtung 10 zurückzufahren, wird erneut der Betätigungsstift 20 verwendet, jedoch nicht in die Bohrung 17 eingeführt, sondern (gegebenenfalls über eine weitere Bohrung durch eine Abdeckung) in den Zwischenraum zwischen den Sperrklinken eingefahren, der entsprechend ausgebildet ist. Die einander zugewandten Innenkanten der Sperrklinken 24 können zu diesem Zweck (nicht dargestellte) seitliche Auflaufschrägen aufweisen. Alternativ ist der Betätigungsstift 20 an seinem freien Ende konisch verjüngt, um in den Zwischenraum zwischen den Sperrklinken eingeführt werden zu können. Bei einer radialen Bewegung des Betätigungsstiftes 20 werden die Sperrklinken aufgrund ihrer inneren Form mit einem sich nach oben verjüngenden Abstand durch den sich relativ zu den Sperrklinken nach oben bewegenden Betätigungsstift 20 oberhalb der Schwenkachse der Sperrklinken auseinandergedrückt (in den Zustand wie in Figur 9 jedoch in der gespannten Position mit Rastnasen 32 gegenüber den Rastaufnahmen 34), sodass die Sperrklinken um ihre jeweiligen Achsen verschwenken und dabei die Rastnasen 32 der Sperrklinken 24 mit den Rastaussparungen 34 an der Schlittenführung außer Eingriff gebracht werden.

Anschließend kann der Schlitten wieder in radialer Richtung (bezüglich der Achse 50 des Werkzeugs) nach innen bewegt werden (in Richtung der Position gemäß Figur 9), wobei die Sperrklinken in der entrasteten Stellung bleiben, weil die Feder 14, welche den Stößel 5 unterstützt bzw. vorspannt, eine entsprechende Kraft radial nach innen auf den Schlitten 9 ausübt, sodass die Feder den Schlitten konstant nach unten gegen den Betätigungsstift 20 drückt, der dadurch die Sperrklinken 24 außer Eingriff mit den Sperrklinkenaufnahmen 34 hält, während er den Schlitten 9 radial zurückzieht.

Bei Erreichen der vollständig entspannten Position nehmen die Sperrklinken 24 dann wieder ihre Ausgangsposition ein.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Scheibenförmiges Werkzeug (100) mit einem eine Rotationsachse ((50) definierenden und um diese drehbaren scheiben- bzw. ringförmigen Grundkörper (1) und einer Mehrzahl von segmentartigen Schneidenträgern (2), die an der Peripherie des Grundkörpers (1) befestigbar sind, und mit mindestens einer Spannvorrichtung zur Befestigung der Schneidenträger (2) an dem Grundkörper, **dadurch gekennzeichnet, dass** die Spannvorrichtung (10) für die Befestigung und das Spannen eines Schneidenträgers (2) jeweils einen am Grundkörper (1) beweglich gelagerten Spannkeil (3) aufweist, dessen eine Spannfläche (4) aufweisendes Abtriebsende (13) mit einer Aussparung (8) an einem Scheidenträger (2) und dessen Antriebsende (23) mit einem ebenfalls beweglich am Grundkörper (1) angeordneten Stößel (5) in Eingriff steht, wobei der Stößel (5) auf einem am Grundkörper maschinell verschiebbar montierten Schlitten (9) in Bewegungsrichtung des Schlittens federnd nachgiebig gelagert ist.

2. Scheibenförmiges Werkzeug nach Anspruch 1, **dadurch gekennzeichnet, dass** der Grundkörper eine zentrale Aufnahmeöffnung oder einen zentralen Zapfen für die Verbindung mit einer Antriebsspindel (30) aufweist.

3. Scheibenförmiges Werkzeug nach Anspruch 1 oder 2, **dadurch gekennzeichnet, dass** der Grundkörper mehrteilig ausgebildet ist und eine Ringscheibe sowie ein zentrales Verbindungselement zu einer Spindel (30) aufweist, wobei die Spannvorrichtung (10) mit Spannkeil (3), Stößel (5) und Schlitten (9) auf der Ringscheibe montiert ist.

4. Scheibenförmiges Werkzeug nach einem der vorstehenden Ansprüche, **dadurch gekennzeichnet, dass** der Spannkeil (3) eine längliche Form hat und in seiner Längsrichtung verschiebbar am Grundkörper (1) gelagert ist.

5. Scheibenförmiges Werkzeug nach einem der vorstehenden Ansprüche, **dadurch gekennzeichnet, dass** der Stößel (5) eine längliche Form hat und in seiner Längsrichtung verschiebbar am Grundkörper gelagert ist.

6. Scheibenförmiges Werkzeug nach einem der vorstehenden Ansprüche, **dadurch gekennzeichnet, dass** das Abtriebsende (15) des Stößels (5) eine zu seiner Längsrichtung geneigte Abtriebsfläche (6) für den Eingriff mit dem Antriebsende (23) des Spannkeiles (3) hat.

7. Scheibenförmiges Werkzeug nach einem der vorstehenden Ansprüche, **dadurch gekennzeichnet, dass** die Bewegungsrichtungen von Stößel (5) und Spannkeil (3) einen Winkel < 180 °, vorzugsweise 80 -140° miteinander einschließen, wenn das Abtriebsende (15) des Stößels (5) mit dem (23) Antriebsende des Spannkeiles in Eingriff steht.

8. Scheibenförmiges Werkzeug nach einem der vorstehenden Ansprüche, **dadurch gekennzeichnet, dass** der Schlitten (9) und/oder der Stößel (5) und/oder der Spannkeil (3) jeweils linear oder entlang eines Kreisbogens bewegbar gelagert sind.

9. Scheibenförmiges Werkzeug nach einem der vorstehenden Ansprüche, **dadurch gekennzeichnet, dass** der Schlitten (9) mindestens eine Rastposition aufweist, die der Spannstellung des Spannkeiles (3) entspricht, in welcher der Spannkeil (3) durch den Stößel (5) in der Spannstellung gehalten wird.

10. Scheibenförmiges Werkzeug nach einem der vorstehenden Ansprüche, **dadurch gekennzeichnet, dass** als Rastelement ein im Grundkörper beweglich gelagerter Stift (vorgesehen ist, der sich in der Raststellung in eine Rastbohrung des Schlittens erstreckt und durch unabhängig vom Grundkörper gelagerten Betätigungsstift mit der Rastbohrung im Schlitten außer Eingriff bringbar ist.

11. Scheibenförmiges Werkzeug nach einem der vorstehenden Ansprüche, **dadurch gekennzeichnet, dass** der Betätigungsstift für den Eingriff in die Rastbohrung und für eine Verschiebung des Schlittens in Spannstellung und/oder aus der Spannstellung heraus parallel und senkrecht zur Rotationsachse des Werkzeugs verschiebbar ist.

12. Scheibenförmiges Werkzeug nach einem der vorstehenden Ansprüche, **dadurch gekennzeichnet, dass** der Betätigungsstift an einem maschinell verfahrbaren Betätigungselement außerhalb des Grundkörpers angeordnet ist.

13. Scheibenförmiges Werkzeug nach einem der vorstehenden Ansprüche, **dadurch gekennzeichnet, dass** das Betätigungselement eine Spindel eines zweiten quer zur Rotationsachse des ersten Werkzeugs bewegbaren Werkzeugs ist.

14. Scheibenförmiges Werkzeug nach einem der vorstehenden Ansprüche, **dadurch gekennzeichnet, dass** als Rastelement mindestens eine federnd vorgespannte Rastklinke vorgesehen ist.

15. Scheibenförmiges Werkzeug nach einem der vorstehenden Ansprüche, **dadurch gekennzeichnet, dass** einem Stößel (5) jeweils zwei bezüglich der Vorschubrichtung des Stößel (5) zueinander spiegelbildlich angeordnete Spannkeile zugeordnet sind, die in zwei verschiedene Aussparungen eines segmentartigen Schneidenträgers eingreifen und durch Vorschub oder Rückzug des Stößels (5) gleichzeitig bewegbar sind.

## Claims

1. Disc-shaped tool (100) comprising a disc-shaped or annular body (1) defining an axis (50) of rotation and rotatable about this axis (50), a plurality of segmented cutting edge carriers (2) mounted at the periphery of the body (1), and at least one clamping means for mounting the cutting edge carriers (2) on said body, **characterized in that** each clamping means (10) for mounting and clamping a cutting edge carrier (2) comprises a clamping key (3) moveably supported on said body (1), an output end (13) of which clamping key (3) comprising a clamping surface (4) and engaging a recess (8) on said cutting edge carrier (2), and a driving end (23) of which engaging a plunger, which is as well moveably supported on said body (1), wherein the plunger (5) is supported on a carriage (3) mounted on said body in an automatically moveable manner, and is supported resiliently along the direction of movement of said carriage.

2. Disc-shaped tool (100) according to claim 1, **characterized in that** the body comprises a central receiving aperture or a central pin for connection to a driving spindle (30).

3. Disc-shaped tool (100) according to claim 1 or 2, **characterized in that** the body is comprised of several pieces and comprises an annular disc as well as a central connecting element to a spindle (30), wherein the clamping means (10) including the clamping key (3), the plunger (5) and the carriage (9) are mounted on said annular disc.

4. Disc-shaped tool (100) according to one of the preceding claims, **characterized in that** the clamping key (3) is of an elongate shape and moveably supported on said body along its longitudinal direction.

5. Disc-shaped tool (100) according to one of the preceding claims, **characterized in that** the plunger (5) is of an elongate shape and moveably supported on said body (1) along its longitudinal direction.

6. Disc-shaped tool (100) according to one of the preceding claims, **characterized in that** a driving end (15) of said plunger (5) comprises a driving surface (6) inclined with respect to the longitudinal direction of said plunger for engagement with the driving end (23) of the clamping key (3).

7. Disc-shaped tool (100) according to any of the preceding claims, **characterized in that** the directions of movements of the plunger (5) and the clamping key (3), respectively, include an angle of less than 180°, preferably 80-140°, once the output end (15) of the plunger (5) engages the driving end (23) of the clamping key (3).

8. Disc-shaped tool (100) according to any of the preceding claims, **characterized in that** the carriage (9) and/or the plunger (5) and/or the clamping key (3) are each supported for being moved linearly or along a circular arc.

9. Disc-shaped tool (100) according to any of the preceding claims, **characterized in that** the carriage (9) comprises at least one detent position corresponding to the clamping position of the clamping key (3), in which the clamping key (3) is kept in the clamping position by means of the plunger.

10. Disc-shaped tool (100) according to any of the preceding claims, **characterized in that** a pin moveably supported on said body is provided as a locking element and extends into a locking hole of the carriage in the locking position thereof and may be put out of engagement with the locking hole in the carriage by means of an actuation pin supported independently of the body.

11. Disc-shaped tool (100) according to any of the preceding claims, **characterized in that** the actuation pin is moveable out of the clamping position thereof and parallel and perpendicular to the rotational axis of the tool for engaging the locking hole and for moving the carriage into the clamping position.

12. Disc-shaped tool (100) according to any of the preceding claims, **characterized in that** the actuation pin is provided on an actuating element, which is automatically moveable and arranged outside of the body.

13. Disc-shaped tool (100) according to any of the preceding claims, **characterized in that** the actuation element is a spindle of a second tool, which is moveable crosswise of the rotational axis of the first tool.

14. Disc-shaped tool (100) according to any of the preceding claims, **characterized in that** that least one spring biased locking pawl is provided as the locking element.

15. Disc-shaped tool (100) according to any of the preceding claims, **characterized in that** two clamping keys are each associated with a plunger (5) and are arranged in a mirror-inverted arrangement with respect to each other, which clamping keys are engaging two different recesses of a segment-like cutting edge carrier and which are simultaneously moveable by advancing or retracting the plunger (5).

## Revendications

1. Outil en forme de disque (100), avec un corps de base (1) en forme de disque ou d'anneau, définissant un axe de rotation (50) et rotatif autour de cet axe, et avec une pluralité de porte-lames (2) du genre segments qui peuvent être fixés sur la périphérie du corps de base (1), et avec au moins un dispositif de serrage permettant de fixer les porte-lames (2) sur le corps de base, **caractérisé en ce que** le dispositif de serrage (10) présente, pour la fixation et le serrage d'un porte-lame (2), une clavette de serrage respective (3) montée à déplacement sur le corps de base (1), clavette dont l'extrémité menée (13), présentant une surface de serrage (4) est en engagement avec un évidement (8) sur un porte-lame (2), et dont l'extrémité menante (23) est en engagement avec un poussoir (5) également disposé à déplacement sur le corps de base (1), sachant que le poussoir (5) est monté, en étant élastiquement flexible dans la direction de déplacement du coulisseau, sur un coulisseau (9) monté sur le corps de base de manière à pouvoir être déplacé par une machine.

2. Outil en forme de disque selon la revendication 1, **caractérisé en ce que** le corps de base présente une ouverture réceptrice centrale ou un tourillon central pour la liaison avec une broche d'entraînement (30).

3. Outil en forme de disque selon la revendication 1 ou 2, **caractérisé en ce que** le corps de base est réalisé en plusieurs parties et présente une couronne ainsi qu'un élément central de liaison pour une broche (30), sachant que le dispositif de serrage (10) est monté avec la clavette de serrage (3), le poussoir (5) et le coulisseau (9) sur la couronne.

4. Outil en forme de disque selon l'une des revendications précédentes, **caractérisé en ce que** la clavette de serrage (3) possède une forme oblongue et est montée sur le corps de base (1) à déplacement dans sa direction longitudinale.

5. Outil en forme de disque selon l'une des revendications précédentes, **caractérisé en ce que** le poussoir (5) possède une forme oblongue et est monté sur le corps de base à déplacement dans sa direction longitudinale.

6. Outil en forme de disque selon l'une des revendications précédentes, **caractérisé en ce que** l'extrémité menée (15) du poussoir (5) possède une surface menée (6) inclinée par rapport à sa direction longitudinale, pour l'engagement avec l'extrémité menante (23) de la clavette de serrage (3).

7. Outil en forme de disque selon l'une des revendications précédentes, **caractérisé en ce que** les directions de déplacement du poussoir (5) et de la clavette de serrage (3) forment entre elles un angle inférieur à 180°, de préférence compris entre 80° et 140°, lorsque l'extrémité menée (15) du poussoir (5) est en engagement avec l'extrémité menante (23) de la clavette de serrage.

8. Outil en forme de disque selon l'une des revendications précédentes, **caractérisé en ce que** le coulisseau (9) et/ou le poussoir (5) et/ou la clavette de serrage (3) sont respectivement montés à déplacement linéaire ou le long d'un arc de cercle.

9. Outil en forme de disque selon l'une des revendications précédentes, **caractérisé en ce que** le coulisseau (9) présente au moins une position de crantage qui correspond à la position de serrage de la clavette de serrage (3), dans laquelle la clavette de serrage (3) est maintenue dans la position de serrage par le poussoir (5).

10. Outil en forme de disque selon l'une des revendications précédentes, **caractérisé en ce qu'**il est prévu comme élément de crantage une goupille montée à déplacement dans le corps de base, qui s'étend dans la position de crantage dans un perçage de crantage du coulisseau et qui peut être désengagée du perçage de crantage du coulisseau par une tige d'actionnement montée indépendamment du corps de base.

11. Outil en forme de disque selon l'une des revendications précédentes, **caractérisé en ce que** la tige d'actionnement peut, pour l'engagement dans le perçage de crantage et pour un déplacement du coulisseau en position de serrage et/ou hors de la position de serrage, être déplacée parallèlement et perpendiculairement à l'axe de rotation de l'outil.

12. Outil en forme de disque selon l'une des revendications précédentes, **caractérisé en ce que** la tige d'actionnement est disposée en dehors du corps de base sur un élément d'actionnement pouvant être déplacé par machine.

13. Outil en forme de disque selon l'une des revendications précédentes, **caractérisé en ce que** l'élément d'actionnement est une broche d'un deuxième outil pouvant être déplacé transversalement à l'axe de rotation du premier outil.

14. Outil en forme de disque selon l'une des revendications précédentes, **caractérisé en ce qu'**il est prévu comme élément de crantage au moins un cliquet d'arrêt élastiquement précontraint.

15. Outil en forme de disque selon l'une des revendications précédentes, **caractérisé en ce que** deux clavette de serrage, disposées symétriquement l'une par rapport à l'autre relativement à la direction d'avancement du poussoir (5), sont respectivement associées à un poussoir (5), clavettes qui s'engagent dans deux évidements différents d'un porte-lame du genre segment et qui peuvent être simultanément déplacées par l'avancement ou le rappel du poussoir (5).
